# EUROPÄISCHE PATENTSCHRIFT

(11) **EP 0 705 649 B1**
(45) Veröffentlichungstag und Bekanntmachung des Hinweises auf die Patenterteilung: **19.01.2000**
(21) Anmeldenummer: 95115222.2
(22) Anmeldetag: 27.09.1995
(51) Int. Cl.: B07B 1/46, B07B 1/12, D21D 5/16, B01D 29/01

(54) **Verfahren zur Herstellung eines Flach- oder Zentripetalsiebes**
Method for manufacturing a flat or centripetal screen
Procédé de fabrication d'un tamis plat ou centripète

(30) Priorität: 05.10.1994 DE 4435538
(43) Veröffentlichungstag der Anmeldung: 10.04.1996
(73) Patentinhaber: Voith Sulzer Stoffaufbereitung GmbH, 88212 Ravensburg (DE)
(72) Erfinder: Lange, Werner, D-89564 Nattheim (DE)
(74) Vertreter: Dr. Weitzel & Partner

(56) Entgegenhaltungen:
- EP-A- 0 182 688
- EP-A- 0 417 408
- EP-A- 0 499 154

## Beschreibung

Die Erfindung betrifft ein Verfahren zur Herstellung von Sieben.

Beim Herstellen von Flach- oder Zentripetalsieben ist das Befestigen der Stäbe an den stabtragenden Elementen sehr aufwendig. Die Stäbe werden in der Regel durch Schweißen an den stabtragenden Elementen angeordnet. Dies führt jedoch zu einer Reihe von Nachteilen, da beim Schweißen große Schweißspannungen auf das Bauteil übertragen werden, die zu einem Verziehen des gesamten Siebkörpers führen können. Des weiteren ist die Befestigung nicht immer gewährleistet, da es unter bestimmten Umständen und im Laufe der Zeit aufgrund von Verschleißerscheinungen zu einem Auflösen der Schweißnähte kommen kann. Die Fertigung selbst ist an und für sich sehr umständlich und zeitaufwendig, des weiteren ist es auch sehr schwierig, die Schlitzweite zwischen zwei benachbarten Siebstäben genau einzustellen.

EP-A-0499154 beschreibt ein Verfahren zum Herstellen von Flachsieben, umfassend eine Vielzahl von im wesentlichen zueinander achsparallel angeordneten Stäben mit dazwischen befindlichen Siebschlitzen und mit wenigstens zwei stabtragenden Elementen. Die stabtragenden Elemente weisen randoffene Aussparungen zum Einlegen der Stäbe auf. Dabei wird die Verbindung zwischen dem einzelnen Siebstab und den Tragstäben als Schnappverbindung gestaltet. Die Siebstäbe werden nämlich quer zur Längserstreckung der Tragstäbe in deren Aussparungen eingepreßt.

EP-A-0417408 beschreibt ein Verfahren, bei welchem Siebstäbe in die Aussparungen von nicht-gerundeten Flachstählen eingelegt werden. Die Flachstähle werden sodann bis zur Kreisform gerundet.

Der Erfindung liegt die Aufgabe zugrunde, ein Verfahren anzugeben, mit dem sich Flach- oder Rundsiebe herstellen lassen durch Einlegen von Siebstäben in die Aussparungen von stabtragenden Elementen, und zwar auf kostengünstige und zuverlässige Weise.

Diese Aufgabe wird durch die Merkmale des Anspruchs 1 gelöst. Dadurch, daß eine Befestigung der Stäbe an den stabtragenden Elementen kraftschlüssig durch Klemmung aufgrund plastischer Verformung des stabtragenden Elementes bzw. der stabtragenden Elemente erfolgt, wird ein einfach zu realisierendes Fertigungsverfahren zur Herstellung von Sieben realisiert. Des weiteren werden dem Gesamtbauteil Sieb keine weiteren Spannungen von außen aufgeprägt. Es sind extrem kleine Schlitzweiten möglich, die eine relativ geringe Streubreite aufweisen.

Es können verschiedene Profilformen für die Stäbe verwendet werden. Vorzugsweise wird jedoch eine Form gewählt, die im geklemmten Zustand ein möglichst flächiges Anliegen der Stäbe an den Wänden der Aussparungen der stabtragenden Elemente ermöglicht.

Zur zusätzlichen Sicherheit können die Stäbe mit den stabtragenden Elemente stoffschlüssig, beispielsweise durch eine Lötverbindung, verbunden werden.

Als stabtragende Elemente können beispielsweise Stäbe oder aber auch Platten bestimmter Stärke genutzt werden. Im Ausgangszustand weisen die stabtragenden Elemente im Bereich ihrer äußeren Abmessungen einen bestimmten Krümmungsradius auf. Des weiteren werden in diesem Bereich ihrer äußeren Abmessungen randoffene Aussparungen eingearbeitet. Deren Form und maßliche Festlegung erfolgt dabei in Abhängigkeit der einzuklemmenden Stäbe sowie der Endgestaltung, d.h. insbesondere dem Endradius des Siebes. Die Stäbe werden anschließend in die randoffenen Aussparungen eingelegt und durch Zurückbiegen auf einen größeren Radius als den Krümmungsradius im Anfangszustand der stabtragenden Elemente mit diesem verklemmt.

Die Erfindung ist anhand einer Zeichnung näher erläutert. In dieser ist ein Ausschnitt aus einem Zentripetalsieb im Endzustand dargestellt. Das Zentripetalsieb 1 umfaßt wenigstens zwei stabtragende Elemente 2, von denen hier aus Vereinfachungsgründen nur das Element 2a dargestellt ist und eine Vielzahl von Stäben 3. Die Stäbe 3 sind in Aussparungen 4 der stabtragenden Elemente 2 eingelegt und sind formschlüssig durch Klemmung mit diesen verbunden. Das stabtragende Element 2 kann dabei entweder als Stab oder aber als Platte ausgeführt sein.

Das Zentripetalsieb 1 läßt sich im Endzustand durch die Anordnung der Stabmittelachsen auf einem bestimmten Krümmungsradius beschreiben. Die den Stäben 3 zugewandte Seite 5 des stabtragenden Elementes, in dessen Bereich die randoffenen Aussparungen 4 vorgesehen sind, kann durch einen Radius r beschrieben werden.

Im Anfangszustand, d.h. zu Beginn der Fertigung eines Zentripetalsiebes 1, wird das stabtragende Element 2, derart hergestellt, daß dieses keinen Spannungen unterworfen ist. Gemäß dem Ausführungsbeispiel bedeutet dies das Herausschneiden einer gekrümmt ausgeführten Platte aus einer größeren Platte mit einer bestimmten Dicke d, wobei sich deren äußerer Abmessungen durch einen bestimmten definierten Krümmungsradius R beschreiben lassen, welcher kleiner als der im Endzustand vorliegende Radius r ist. In diesem hier nicht dargestellten Ausgangszustand, werden im Bereich der äußeren Abmessungen des stabtragenden Elementes, bezogen auf deren Krümmungsverlauf, randoffene Aussparungen vorgesehen. Diese randoffenen Aussparungen entsprechen von der Größe und der Kontur im wesentlichen der Große und der Kontur der aufzunehmenden Stäbe 3. Die Anordnung der randoffenen Aussparungen im Bereich der äußeren Abmessungen des stabtragenden Elementes 2a erfolgt in einem bestimmten definierten Abstand voneinander, welcher eine Funktion der zu erhaltenden bzw. zu erzielenden Siebschlitzbreiten s ist.

Die Siebstäbe 3 werden dann in die Aussparungen 4 eingelegt und durch Zurückbiegen, d.h. Vergrößerung des Krümmungsradius bis auf r, kraftschlüssig mit den stabtragenden Elementen verbunden.

Die Ausführung der Kontur der Aussparung 4 erfolgt in Abhängigkeit vom einzuklemmenden Siebstab 3 und der beabsichtigten Biegung der stabtragenden Elemente 2, d.h. von der beabsichtigten Ausführung, insbesondere der Größe der Krümmung der Siebe. In Analogie dazu erfolgt die Anordnung der Aussparungen in einem bestimmten definierten Abstand in Abhängigkeit von der zu erzielenden Siebschlitzbreite s. Eine weitere Einflußgröße ist das für die stabtragenden Elemente eingesetzte Material.

Für die Herstellung von Flachsieben bedeutet dies, daß das stabtragende Element bzw. die stabtragenden Elemente derart entgegen ihrer Krümmung im Ausgangszustand gebogen werden, daß diese sich im Endzustand durch ein, eine Gerade beschreibendes Element beschreiben lassen.

Zum Tragen der Stäbe kann eine Vielzahl von stabtragenden Elementen vorgesehen sein. Es sind jedoch immer wenigstens zwei stabtragende Elemente vorhanden.

Im hier dargestellten Endzustand, d.h. im fertigen Zentripetalsieb verlaufen die Seitenflächen 6 und 7 der Aussparung 4 in einem bestimmten Winkel gegenüber einer gedachten Vertikalen. Im Ausgangszustand verlaufen diese beiden Seiten 6 und 7 in einem jeweils weitaus größeren Winkel gegenüber der Vertikalen. Erst im Endzustand, d.h. nach Zurückbiegen des stabtragenden Elementes 2, hier 2a, erfolgt vorzugsweise über die gesamten Seitenflächen 6 und 7 ein flächiges Anliegen der Außenflächen 8 bzw. 9 der Stäbe 3. Im Anfangszustand besitzt damit der einzelne Stab 3 eine wesentlich geringere Querschnittsfläche als die durch die Aussparung beschriebene Querschnittsfläche im Anfangszustand. Mit anderen Worten, die Aussparung ist im Anfangszustand wesentlich größer als der Querschnitt des aufzunehmenden Stabes 3.

Die hier im Randbereich des stabtragenden Elementes vorgesehene, zum Teil trichterförmige Gestaltung der Ausnehmung und die dazu komplementäre trichterförmige Gestaltung des entsprechend dazu komplementären Teiles der Siebstäbe 3 ist dabei eine bevorzugte Variante. Diese ermöglicht beim Zurückbiegen der stabtragenden Elemente ein flächiges Anliegen zwischen Siebstäben und den Aussparungen bzw. den Wänden der Aussparungen im stabtragenden Element. Andere Ausführungen sind ebenfalls denkbar, jedoch gestalten diese sich wesentlich ungünstiger für die zu erzielende Klemmwirkung, bzw. es wird kein flächiges Anliegen im gesamten Aufnahmebereich für die Siebstäbe 3 am stabtragenden Element 2 erzielt.

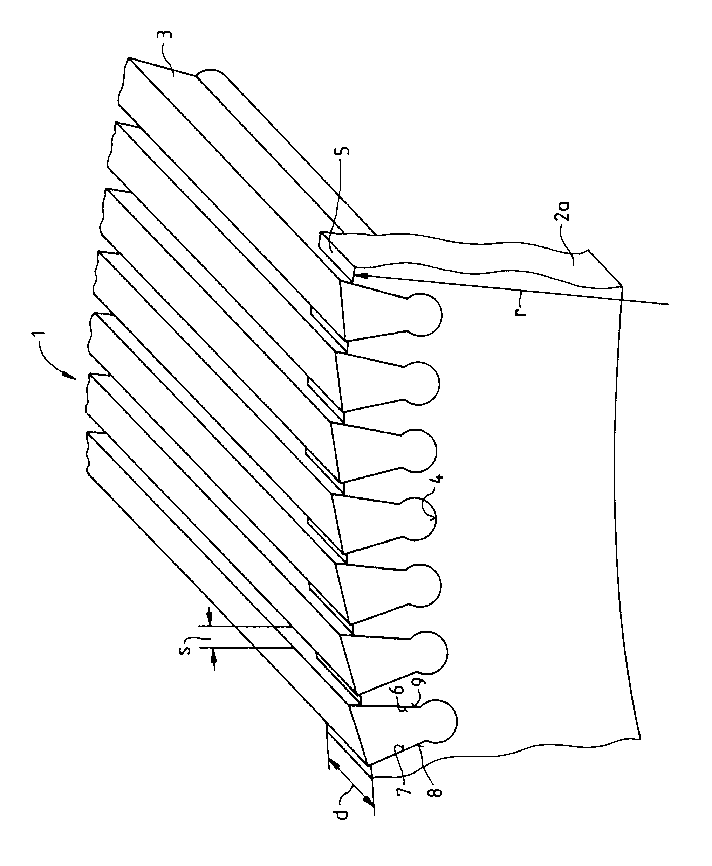

## Patentansprüche

1. Verfahren zur Herstellung von Sieben (1), umfassend eine Vielzahl von im wesentlichen zueinander achsparallel angeordneten Stäben (3) mit dazwischen befindlichen Siebschlitzen und mit wenigstens zwei stabtragenden Elementen (2), welche mit randoffenen Aussparungen (4) versehen sind;
1.1 die stabtragenden Elemente (2) sind um eine Achse gekrümmt, die auf der den Aussparungen (4) gegenüberliegenden Seite liegt;
1.2 die Stäbe (3) werden im Bereich ihrer Enden in die randoffenen Aussparungen (4) der stabtragenden Elemente (2) eingelegt und befestigt;
1.3 die Befestigung erfolgt kraftschlüssig durch Klemmung aufgrund plastischer Verformung der stabtragenden Elemente (2);
1.4 die stabtragenden Elemente (2) werden derart hergestellt, daß deren Kontur im unbelasteten Zustand, d.h. im Ausgangszustand, sich wenigstens durch eine minimale Krümmung beschreiben läßt;
1.5 die randoffenen Aussparungen (4) werden im Ausgangszustand im Bereich des größeren Krümmungsradius (r) der stabtragenden Elemente (2) eingearbeitet;
1.6 die Stäbe (3) und die stabtragenden Elemente (2) werden zu einer Siebschale durch Einlegen der Stäbe (3) in die randoffenen Aussparungen (4) zusammengesteckt;
1.7 die stabtragenden Elemente (2) werden auf einen Radius größer dem Krümmungsradius (r) der stabtragenden Elemente (2) im Ausgangszustand gebogen.

2. Verfahren zur Herstellung von Sieben nach Anspruch 1, dadurch gekennzeichnet, daß das Biegen der stabtragenden Elemente (2) auf einen Radius von unendlich gegenüber dem Ausgangszustand der stabtragenden Elemente (2) erfolgt.

## Claims

1. Process for producing sieves (1) comprising a plurality of bars (3) arranged with their axes substantially parallel to one another and comprising interposed sieve slots and at least two bar-carrying elements (2) provided with recesses (4) which are open at the edge;
1.1 the bar-carrying elements (2) are curved round an axis located on the side opposite the recesses (4);
1.2 the bars (3), at their end regions, are inserted and fastened in the recesses (4), open at the edge, of the bar-carrying elements (2);
1.3 fastening is effected non-positively by clamping owing to plastic deformation of the bar-carrying elements (2);
1.4 the bar-carrying elements (2) are produced in such a way that their contour in the unloaded state, i.e. in the original state, can be described at least by a minimum curvature;
1.5 the recesses (4) which are open at the edge, in the original state, are made in the region of the greater radius of curvature (r) of the bar-carrying elements (2);
1.6 the bars (3) and the bar-carrying elements (2) are plugged together to form a sieve shell by insertion of the bars (3) into the recesses (4) open at the edge;
1.7 the bar-carrying elements (2) are bent over a radius greater than the radius of curvature (r) of the bar-carrying elements (2) in the original state.

2. Process for producing sieves according to claim 1, characterised in that the bending of the bar-carrying elements (2) is effected to a radius of infinity relative to the original state of the bar-carrying elements (2).

## Revendications

1. Procédé pour la fabrication de cribles (1) comprenant une pluralité de barres (3) sensiblement parallèles les unes aux autres et entre lesquelles sont ménagées des fentes de criblage et avec au moins deux éléments portant les barres (2) pourvus d'encoches (4) ouvertes sur les bords ;
1.1 les éléments portant les barres (2) sont courbés autour d'un axe se trouvant sur le côté opposé aux encoches (4) ;
1.2 les barres (3) sont introduites et fixées à leurs extrémités dans les encoches (4) des éléments portant les barres (2) ;
1.3 la fixation se fait par contact par serrage en raison de la déformation plastique des éléments portant les barres (2) ;
1.4 les éléments portant les barres (2) sont fabriqués de telle sorte que leur contours à l'état non contraint, c'est-à-dire à l'état initial, puissent être décrits au moins par une courbure minimale ;
1.5 les encoches (4) ouvertes sur les bords sont ménagées dans l'état initial dans la région du plus grand rayon de courbure (r) des éléments portant les barres (2) ;
1.6 les barres (3) et les éléments portant les barres (2) sont réunis pour former une auge de crible par l'insertion des barres (3) dans les encoches (4) ouvertes sur les bords ;
1.7 les éléments portant les barres (2) sont courbés à un rayon plus grand que leur rayon de courbure (r) à l'état initial.

2. Procédé pour la fabrication de tamis selon la revendication 1, caractérisé en ce que la flexion des éléments portant les barres (2) est réalisée jusqu'à un rayon infini par rapport à l'état initial des éléments portant les barres (2).
